# EUROPEAN PATENT APPLICATION

(11) **EP 2 187 292 A2**
(43) Date of publication of application: **19.05.2010**
(21) Application number: 09013891.8
(22) Date of filing: 05.11.2009
(51) Int. Cl.: G06F 3/041

(54) **Devices, panels and/or membrane switches made on single frontal surface having touch screen integration with tactile feedback**

(30) Priority: 15.11.2008 IT MC20080035 U
(71) Applicant: Tastitalia S.r.l., 60022 Castelfidardo (AN) (IT)
(72) Inventor: Accattoli, Paolo, 62019 Recanati (MC) (IT)
(74) Representative: Statti, Francesco

(57) **Abstract**

The present invention is designed for the Human Machine Interface sector and specifically regards devices, panels and/or keypads with haptic touch screen provided with a total surface protection, between the user and the equipment itself, to get a completely sealed surface from the outside and to enable their cleaning and/or sterilization thanks to the lack of opening or gaps between the touch screen group and their frontal part.

## Description

### Field of invention

The present invention is designed for the Human Machine Interface sector and specifically regards devices, panels and/or keypads with haptic touch screen provided with a total surface protection, between the user and the equipment itself, to get a completely sealed surface from the outside and to enable their cleaning and/or sterilization thanks to the lack of opening or gaps between the touch screen group and their frontal part.

### Background of invention

In the market there are portable and fixed devices, operator panels or membrane switches with touch screens integrated where the input is by tactile feedback.

To this effect, there are registered patents, among which those of the company Immersion Corporation (U.S.A.), used in several sector such as: Automotive, Medical, Aerospace, Industrial Control, Civil, Military, Telecommunications, White goods, Marine, Point of Sales (POS), Point Of Information (POI).

The drawback in such devices is represented by the deposit and by the infiltration of external agents such as dusts or liquids between the touch pad area and the surrounding surface.

### Disclosure of invention

The aim of this invention is to have devices, panels and/or keypads provided with an active surface without interruptions between the touch screen area and the surrounding surface, in order to ensure the total protection of the frontal surface from the surrounding environment in the digitization area and in the data input area with a tactile feedback or confirmation, applicable to any equipment used in different sectors, among which including but not limited to: Automotive, Medical, Aerospace, Industrial controls, Civil, Military, Telecommunications, White goods, Point Of Sales(POS), Point Of Information (POI). Another aim of the present invention is to allow the user to employ devices, panels and/or keypads where the data input with tactile feedback takes place on enclosed surfaces from the outdoor environment, thanks to a full front layer.

A further purpose of the present invention is to have devices, panels, and/or keypads whose haptic solution of Human Machine Interface with frontal surface takes place in a full layer without openings.

An addition aim of this invention is to have devices, panels and/or keypads with haptic touch screens like touch screens produced with a total protection against infiltration and deposit of external agents such as dusts or liquids. Another purpose of the present invention is to allow the use of devices, panels and/or keypads with tactile response protected by a single frontal film in order to assure their tactile feedback reliability in any case.

A further purpose of this invention is to have devices, panels and/or keypads with tactile feedback added and sealed by a frontal film, both coloured-printed and neutral one, in order to be used for any kind of application, conventional or not, and also in harsh environments.

Another aim of the present invention is to have devices, panels and/or keypads with tactile feedback added and sealed by a frontal film so that they give more guarantees in their applicability into the medical and health sector because their inside is protected by the deposit of bacteria and because their flat surfaces are easy to sterilize.

A further purpose of this invention is to have devices, panels, and/or keypads with tactile feedback added whose frontal film is provided with flexibility in order to be used in the Automotive field, in the navigation satellite systems and in the synoptic panels protecting their interior from infiltrations of pollutant agents, liquids and dusts.

Not the last aim of this invention is to have devices, panels and/or switches with tactile feedback added on systems sealed by frontal film, both flat and embossed in positive or negative with the aim to allow a longer stroke to the film, besides to be easily integrable with existing products or brand new. These and other purposes are achieved by the present invention consisting in devices, panels and/or keypads with haptic touch screen characterized by a total surface protection between the user and the equipment totally sealed from the outside, in order to sterilize their inside avoiding agents infiltration such as dusts and liquids thanks to the lack of opening or the existence of gaps between the touch screen group and the frontal part.

### Detailed description

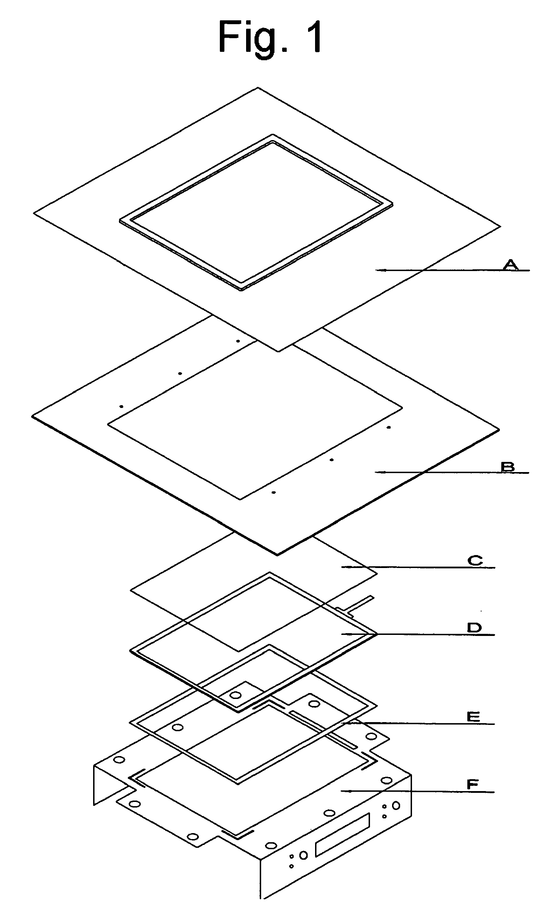

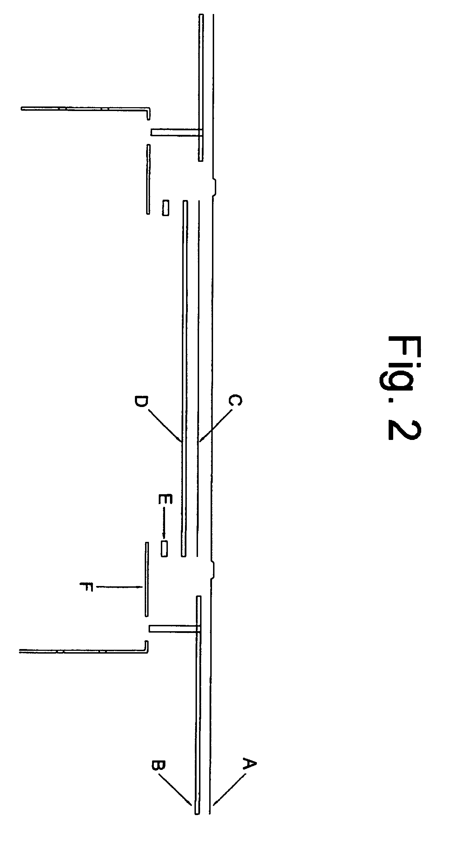

Further features and benefits of the invention will mainly come out from the description of a form execution, preferred but not exclusive of the system representing the object of this patent application showed indicatively but not restrictively in the drawing unit at Fig. 1. and in section view at Fig. 2.

With reference to the Figures 1 and 2, the unit characterised by the letter "A" represents the user side that is the surface, which guarantees the protection from the external environment, sterilizable and so suitable for being used even in the medical and health sector.

The part "B" represents the support or the box where the unit "A" is assembled.

The part "C" indicates an adhesive or glue optionally used to laminate the touch screen or touch pad to the "A" frontal surface.

The part "D" indicates the touch pad or touch screen.

The part "E" represents the glue points or the double-sided adhesive used to fasten the part "D" to the "F" support.

The part "F" shows the support where the actuators are assembled to generate the movement from where the tactile feedback comes from.

As we can see from Figure 2, letter "A", the frontal part could have embossing or recesses to facilitate the movement and therefore the tactile feedback of panels.

Moreover the frontal film, both flat and embossed in positive or negative, has a flexibility that allows a longer stroke to the film and to permit that the invention could be used in devices, panels and/or keypads with touch screen in the Automotive field, in the navigation satellite systems, in the synoptic panels and in medical and health sector or in others, in order to protect their interior from infiltrations of pollutant agents, both liquids and dusts, and to allow the invention to be easily integrable with existing products or brand new.

## Claims

1. Devices, panels and/or membrane switches made on single frontal surfaces having touch screen integration with tactile feedback **characterized by** the fact that they are fully protected by the surrounding environment, achieved by a full front layer surface of digitization without openings in order to keep in every situation a tactile feedback or response to the data input and sealed by a frontal film, both flat and embossed realized in positive or negative, provided with flexibility in order to allow an increased stroke to the film and to permit that this invention could be used in devices, panels and/or keypads with touch screen in the Automotive field, in the navigation satellite systems, in the synoptic panels and in medical and health sector or in others and allow the invention to be easily integrable with existing products or brand new.

2. Devices, panels, and/or membrane switches according to claim 1 **characterized by** the fact of being provided with a haptic solution of Human Machine Interface with full front layer surface without openings.

3. Devices, panels, membrane switches according to the claims 1 and 2 **characterized by** the fact that their tactile areas like touch screens are realized with a total protection against infiltration or deposit of external agents such as dusts or liquids.

4. Devices, panels and/or membrane switches according to the claims 1, 2 and 3 sealed by frontal film, coloured-printed or neutral one and **characterized by** the fact of being provided with a single layer, both flat and embossed made in positive or negative, in order to allow a longer stroke to the film and the use of this invention in traditional and non-traditional applications or in harsh environment.

5. Devices, panels and/or membrane switches according to the claims 1, 2, 3 and 4 **characterized by** the fact that they have sterilizable flat surfaces and therefore suitable to be used in the medical and health sector because they are prevented by the deposit of bacteria.

6. Devices, panels and/or membrane switches according to the claims 1, 2, 3, 4 and 5 **characterized by** the fact that they could be used in the Automotive sector because they guarantee both the tactile feedback and the lack of infiltration by pollutant agents, liquids or dusts, in the multimedia interface systems, navigation satellite systems, synoptic panels for harsh environment and/or for limited room.

7. Devices, panels and/or membrane switches according to the claims 1, 2, 3, 4, 5 and 6 **characterized by** the fact that they can be easily integrated on existing or brand new products.

8. Devices, panels and/or membrane switches according to the claims 1, 2, 3, 4, 5, 6 and 7 **characterized by** the fact that the tactile feedback added on systems sealed by frontal film both flat and embossed made in positive or negative, allows a longer stroke to the film.
